# EUROPEAN PATENT APPLICATION

(11) **EP 2 662 394 A1**
(43) Date of publication of application: **13.11.2013**
(21) Application number: 12732218.8
(22) Date of filing: 05.01.2012
(51) Int. Cl.: C08F 265/06, C08L 27/16, H01M 4/62

(54) **MODIFIER FOR POLYVINYLIDENE FLUORIDE, BINDER RESIN COMPOSITION FOR BATTERIES, SECONDARY CELL ELECTRODE, AND BATTERY**

(30) Priority: 06.01.2011 JP 2011000936
(71) Applicant: Mitsubishi Rayon Co., Ltd., Tokyo 100-8253 (JP)
(72) Inventor: MOMOSE, Fumino, Otake-shi Hiroshima 739-0693 (JP); NODONO, Mitsufumi, Otake-shi Hiroshima 739-0693 (JP)
(74) Representative: TBK
(86) International application number: PCT/JP2012/050093
(87) International publication number: WO 2012/093689

(57) **Abstract**

A modifier for polyvinylidene fluoride (PVDF), which improves the adhesion of PVDF to a metal, a binder resin composition for battery and a battery using the PVDF modifier are provided. The modifier for polyvinylidene fluoride herein is a modifier in which the peeling strength of a specific cured film to an aluminium foil is 20 g/cm or more, and the specific cured film is obtained from a mixture of 6 parts by mass of the modifier for polyvinylidene fluoride and 14 parts by mass of a polyvinylidene fluoride composition. The modifier preferably contains a macromonomer copolymer (X), obtained by polymerizing both a macromonomer (A) having unsaturated double bonds and a vinyl monomer (B) having polar groups. The macromonomer (A) is preferably a methacrylic acid ester-based macromonomer (A-1). The vinyl monomer (B) is preferably a methacrylate, and a fluoroalkyl methacrylate.

## Description

### BACKGROUND OF THE INVENTION

### TECHNICAL FIELD

The invention relates to a modifier for polyvinylidene fluoride, as well as a binder resin composition for battery, an electrode for second battery and a battery containing the modifier.

### BACKGROUND ART

Polyvinylidene fluoride and vinylidene fluoride copolymers (hereinafter collectively and properly referred to as "polyvinylidene fluoride" or "PVDF") serve as fluoro resins excellent in weatherability, chemical resistance and electrochemical stability, and are applied to coatings, electrical components, electronic components, films or the like. However, due to substantial lack of adhesion to other materials, PVDF is hard to be composited with other materials.

Meanwhile, in recent years, lithium ion secondary batteries have been used in portable devices such as mobile phones, video cameras, and personal notebooks, or hybrid vehicles and electric vehicles. An electrode for lithium ion secondary battery is usually obtained by mixing a solvent into a mixture of a powder shaped electrode active material to which an appropriate amount of binder has been added so as to obtain a paste shaped material, coating the paste shaped material on a collector and drying the same, and then pressing the dried material to the collector. For the binder used in such electrode for secondary battery, it is required to have solvent resistance in organic solvents used in electrolytic solutions as well as oxidation resistance and reducibility resistance in driving voltages. In addition, in a manufacturing process for the electrode, the binder also requires solubility in specific solvents. To satisfy these requirements, PVDF is employed as the binder.

However, as PVDF used as the binder has poor adhesion to metal, there is a problem that the electrode active material easily peels off from the collector and the battery has bad cycle characteristics.

To solve the problem, Patent document 1 proposes a method of using a block copolymer having a carboxylic group as a modifier for PVDF, in which the adhesion between the electrode active material and the collector metal is enhanced by use of the carboxylic group in the binder. Nonetheless, in Patent document 1, there is no description about the polymeric structure of the block copolymer. Hence it is difficult to say that the effect of enhancing the adhesion by adding the block copolymer is satisfactory.

### CITATION LIST

### Patent Literature

Patent Document 1: Japanese Patent Publication No. Hei 9-199130

### SUMMARY OF THE INVENTION

### Technical Problem

The invention aims to provide a PVDF modifier that improves the adhesion of PVDF to metal, and a binder resin composition for battery using the PVDF modifier.

### Solution to Problem

As a result of intensive studies, the inventors have found that the adhesion of PVDF to metal may be enhanced by a copolymer obtained by polymerizing a macromonomer having unsaturated double bonds and a vinyl monomer having polar groups, thus achieving the invention.

That is, a first aspect of the invention is a modifier for polyvinylidene fluoride having a peeling strength of 20 g/cm or more measured under the following conditions.

### 1. Manufacturing conditions of a test piece:

A solution is prepared containing 6 parts by mass of a modifier for polyvinylidene fluoride, 14 parts by mass of polyvinylidene fluoride and 80 parts by mass of N-methylpyrrolidone. The solution is coated on an aluminium foil using an applicator, and a resulting coated film is dried at 100°C for 1 hour, thereby obtaining a laminated body of the aluminium foil and a film having a thickness of 30 µm. The laminated body is cut into a width of 1 cm and a length of 15 cm. The film of the laminated body is adhered to a PET sheet (width: 2 cm; length: 10 cm; thickness: 135 µm) with a double-sided tape (manufactured by Sekisui Chemical Co., Ltd.; trade name: #570), thereby obtaining a test piece.

### 2. Measurement conditions of adhesion:

The aluminium foil of the test piece is clamped using a tensilon (RTC-1210A manufactured by Orientec) and stretched at 10 mm/min to measure a load when interfaces of the aluminium foil and the film are peeled apart at 180°, so as to evaluate the adhesion. The measurement is performed in a circumstance at 23°C.
The modifier for polyvinylidene fluoride preferably contains a macromonomer copolymer (X), obtained by polymerizing a macromonomer (A) having unsaturated double bonds and a vinyl monomer (B) having polar groups. The macromonomer (A) is, for example, a methacrylic acid ester-based macromonomer (A-1), and a macromonomer of polystyrene (St), poly(acrylonitrile (AN)/St) and silicone or the like, preferably a methacrylic acid ester-based macromonomer (A-1), and more preferably a compound represented by the following general formula (1).

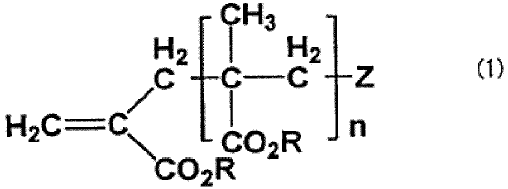

In the general formula (1), R is a linear chain, branched chain, or cyclic hydrocarbon group having 1∼24 carbon atoms and is one selected from a group consisting of alkyl group, phenyl group, benzyl group, aryl group and alkyl ether group. These groups may have a substituent selected from a group consisting of epoxy group, hydroxyl group, isocyanate group, cyano group, amino group, silyl group, carboxyl group and halogen group.

Z is one selected from a group consisting of H, OR², SR², S(O)R¹, S(O)₂R¹ and R³.

R¹ is one selected from a group consisting of alkyl group, aryl group, aralkyl group and organosilyl group. These groups may have a substituent selected from a group consisting of carboxyl group, epoxy group, hydroxyl group, alkoxy group, amino group and halogen group.

R² is one selected from a group consisting of H, alkyl group, aryl group, aralkyl group and organosilyl group. These groups may have a substituent selected from a group consisting of carboxyl group, epoxy group, hydroxyl group, alkoxy group, amino group and halogen group.

R³ is a fragment from a chain transfer reaction or initiation reaction in a free radical polymerization and is one selected from a group consisting of alkyl group, cycloalkyl group, aryl group, aralkyl group, organosilyl group, alkoxyalkyl group, alkoxyaryl group, PR² group and sulfate group. These groups may have a substituent selected from a group consisting of R¹, OR², SR¹, NR¹₂NHR¹, O₂CR¹, halogen, COOH (or metal salt thereof), COOR¹, CN, CONH₂, CONHR¹, CONR¹₂, 2-imidazoline (or metal salt thereof) and amidine (or metal salt thereof).

n is an integer of 0 or greater. When n is greater than 1, R in a repeating unit in the methacrylic acid ester-based macromonomer (A) contains two or more different groups.

A second aspect of the invention is a binder resin composition for battery containing the modifier for polyvinylidene fluoride and PVDF.

A third aspect of the invention is an electrode for secondary battery including a collector and an electrode layer disposed on the collector, wherein the electrode layer includes an electrode active material and the binder resin composition for battery.

A fourth aspect of the invention is a battery including the electrode for secondary battery.

### [Effects of the Invention]

By use of the modifier for polyvinylidene fluoride of the invention, the adhesion of PVDF to metal may be enhanced without reducing excellent characteristics thereof. The binder resin composition for battery of the invention shows excellent effects of enhancing the adhesion between an electrode active material and a collector, or the adhesion between electrode active materials.

### DETAILED DESCRIPTION OF DISCLOSED EMBODIMENTS

The modifier for polyvinylidene fluoride of the invention is a modifier that improves the adhesive property of PVDF to metal by a small amount of addition. With respect to a test piece manufactured using the solution containing 6 parts by mass of the modifier for polyvinylidene fluoride, 14 parts by mass of polyvinylidene fluoride and 80 parts by mass of N-methylpyrrolidone (hereinafter properly referred to as "NMP") under the manufacturing conditions of the test piece, a peeling strength measured under the above measurement conditions is 20 g/cm or more, preferably 50 g/cm or more, and especially preferably 100 g/cm or more. In addition, in order to control the addition amount of the modifier to be a small amount and to maintain good cycle characteristics and electrical stability of the electrode, the peeling strength is preferably 1000 g/cm or less, and more preferably 500 g/cm or less.

The structure of the modifier for polyvinylidene fluoride of the invention (hereinafter properly referred to as "PVDF modifier") is not particularly limited, and is preferably, for example, a polymerizable monomer having high compatibility with PVDF, and a copolymer of a polymerizable monomer having a functional group having high adhesive property to metal.

The polymerizable monomer having high compatibility with PVDF is, for example, the following compounds: (meth)acrylate monomer such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, hexyl (meth)acrylate, octyl (meth)acrylate, dodecyl (meth)acrylate, stearyl (meth)acrylate, 2-ethylhexyl (meth)acrylate, phenyl (meth)acrylate, benzyl (meth)acrylate, methoxyethyl (meth)acrylate, ethoxyethyl (meth)acrylate, n-butoxyethyl (meth)acrylate, isobutoxyethyl (meth)acrylate, tert-butoxyethyl (meth)acrylate, phenoxyethyl (meth)acrylate, nonylphenoxyethyl (meth)acrylate, 3-methoxybutyl (meth)acrylate, Blemmer PME-100 (trade name, manufactured by NOF CORPORATION), Blemmer PME-200 (trade name, manufactured by NOF CORPORATION), etc.; fluoroalkyl methacrylate such as 2,2,2-trifluoroethylmethacrylate, 2,2,3,3-tetrafluoropropylmethacrylate, 2,2,3,3,3-pentafluoropropyl methacrylate, 2,2,3,4,4,4-hexafluorobutyl methacrylate, 2,2,3,3,4,4,5,5-octafluoropentyl methacrylate, 2,2,2-trifluoroethyl α-fluoroacrylate, 2,2,3,3-tetrafluoropropyl α-fluoroacrylate; 2,2,3,3,3-pentafluoropropyl α-fluoroacrylate; 2,2,3,3,4,4,5,5-octafluoropentyl α-fluoroacrylate, etc.; and fluoromonomer such as vinylidene fluoride, tetrafluoroethylene, hexafluoropropylene, trifluoroethylene, trifluorochloroethylene, etc.

The functional group having high adhesive property to metal is, for example, carboxyl group, carboxylic acid anhydride group, phosphate group, sulfonic acid group, and salts of the foregoing, as well as polar group such as epoxy group and hydroxyl group.

The manufacturing method of the PVDF modifier of the invention is not particularly limited, and may be a publicly known polymerization method. For example, the polymerization may be carried out as solution polymerization, bulk polymerization, suspension polymerization, emulsion polymerization or the like.

The PVDF modifier of the invention is preferably a macromonomer copolymer (X) obtained by polymerizing a macromonomer (A) having unsaturated double bonds and a vinyl monomer (B) having polar groups.

### <Macromonomer (A)>

The macromonomer (A) having unsaturated double bonds is not particularly limited as long as it has unsaturated double bonds capable of performing radical polymerization at terminals. For example, from a viewpoint of high compatibility with PVDF, a macromonomermethacrylic acid ester-based macromonomer (A-1) is preferable. The rmethacrylic acid ester-based macromonomer (A-1) is more preferably a high molecular weight monomer represented by the general formula (1) having unsaturated double bonds at terminals.

Among these monomers, from viewpoints of compatibility of the resulting PVDF modifier with PVDF, enhancement effect of adhesion to metal, size of PVDF crystals, and phase-separated structure between the PVDF phase and the modifier phase, R is preferably an unsubstituted alkyl group, fluorine-substituted alkyl group, phenyl group, benzyl group and alkyl ether group, and more preferably a C1∼4 alkyl group.

The methacrylic acid ester-based macromonomer (A-1) may be produced by a publicly known method of polymerizing a vinyl monomer. For example, the following methods may be mentioned: a method of polymerizing a vinyl monomer in the presence of a metal chain transfer agent (U.S. Patent No. 4680352), a method of using α-substituted unsaturated compound such as α-bromomethyl styrene as a chain transfer agent (International Publication No. WO 88/04304 pamphlet), a method of chemically bonding a polymerizable group (Japanese Patent Publication No. Sho 60-133007; U.S. Patent No. 5147952), and a thermal decomposition method (Japanese Patent Publication No. Hei 11-240854). Among the production methods of the methacrylic acid ester-based macromonomer (A-1), in terms of economic efficiency of production process and operating convenience, a method of polymerizing a vinyl monomer in the presence of a metal chain transfer agent is preferable.

A metal chain transfer catalyst may be any catalyst as long as it has chain transfer ability under conditions of radical polymerization. A cobalt (II) chelate represented by the following general formula (2) is preferable.

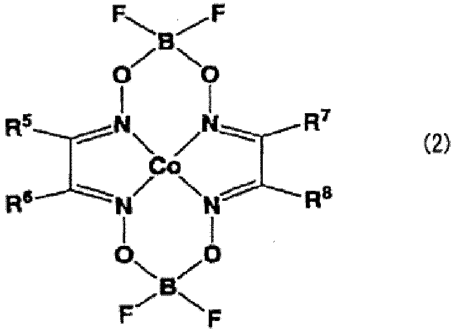

In the general formula (2), R⁵∼R⁸ are respectively any of alkyl group, phenyl group, and substituted phenyl group having 1-8 carbons. R⁵∼R⁸ may be all the same, partly the same, or all different.

The vinyl monomer used may be the vinyl monomer represented by the following general formula (3). Among the vinyl monomers, from viewpoints of compatibility of the resulting PVDF modifier with PVDF, enhancement effect of adhesion to metal, size of PVDF crystals, and phase-separated structure between the PVDF phase and the modifier phase, methacrylate and fluoroalkyl methacrylate are preferable.

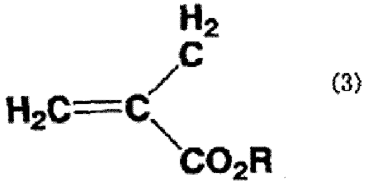

In addition, in the general formula (3), R is the same hydrocarbon as R in the general formula (1).

The methacrylate is, for example, the following compounds: methyl methacrylate, ethyl methacrylate, n-propyl methacrylate, isopropyl methacrylate, n-butyl methacrylate, isobutyl methacrylate, tert-butyl methacrylate, hexyl methacrylate, octyl methacrylate, dodecyl methacrylate, stearyl methacrylate, 2-ethylhexyl methacrylate, phenyl methacrylate, benzyl methacrylate, methoxyethyl methacrylate, ethoxyethyl methacrylate, n-butoxyethyl methacrylate, isobutoxyethyl methacrylate, tert-butoxyethyl methacrylate, phenoxyethyl methacrylate, nonylphenoxyethyl methacrylate, 3-methoxybutyl methacrylate, Blemmer PME-100 (trade name, manufactured by NOF CORPORATION), and Blemmer PME-200 (trade name, manufactured by NOF CORPORATION).

In addition, the following compounds are suitable for use as the fluoroalkyl methacrylate: 2,2,2-trifluoroethylmethacrylate, 2,2,3,3-tetrafluoropropylmethacrylate, 2,2,3,3,3-pentafluoropropyl methacrylate, 2,2,3,4,4,4-hexafluorobutyl methacrylate, 2,2,3,3,4,4,5,5-octafluoropentyl methacrylate, 2,2,2-trifluoroethyl α-fluoroacrylate, 2,2,3,3-tetrafluoropropyl α-fluoroacrylate, 2,2,3,3,3-pentafluoropropyl α-fluoroacrylate, 2,2,3,3,4,4,5,5-octafluoropentyl α-fluoroacrylate, or the like.

Among the methacrylates, from viewpoints of easiness of acquisition, compatibility of the resulting PVDF modifier with PVDF, enhancement effect of adhesion to metal, size of PVDF crystals, and phase-separated structure between the PVDF phase and the modifier phase, the following are suitable for use. Methyl methacrylate, ethyl methacrylate, n-butyl methacrylate, tert-butyl methacrylate, dodecyl methacrylate, stearyl methacrylate and 2-ethylhexyl methacrylate are preferable, and methyl methacrylate, ethyl methacrylate, n-butyl methacrylate and tert-butyl methacrylate are more preferable. One type of the vinyl monomers may be used alone, or two or more types thereof may be used in combination.

From viewpoints of compatibility of the resulting PVDF modifier with PVDF and reactivity with the vinyl monomer (B) having polar groups, a number average molecular weight of the methacrylic acid ester-based macromonomer (A-1) is preferably 500-1,000,000, and more preferably 1,000-500,000. One type of the methacrylic acid ester-based macromonomers (A-1) may be used alone, or two or more types thereof may be used in combination.

### <Vinyl Monomer (B)>

The vinyl monomer (B) having polar groups may be any vinyl monomer as long as it has a functional group having binding property or affinity to metal. The polar group is, for example, carboxyl group, carboxylic acid anhydride group, phosphate group, sulfonic acid group, and salts of the foregoing, epoxy group and hydroxyl group.

The vinyl monomer having carboxyl groups is, for example, the following monomers: acrylic acid, methacrylic acid, crotonic acid, maleic acid, fumaric acid, itaconic acid, citraconic acid, mesaconic acid, alkenyl succinic acid, 2-carboxyethyl (meth)acrylate, acrylamide glycolic acid, and 1,2-cyclohexanedicarboxylic acid.

The vinyl monomer having carboxylic acid anhydride groups is, for example, an anhydride of the vinyl monomer having carboxyl groups.

The vinyl monomer having phosphate groups is, for example, the following monomers: 2-(meth)acryloyloxy ethyl acid phosphate, 2-(meth)acryloyloxy ethyl acid phosphate-monoethanolamine salt, diphenyl((meth)acryloyloxy ethyl) phosphate, (meth)acryloyloxy propyl acid phosphate, 3-chloro-2-acid phosphoxy propyl (meth)acrylate, acid phosphoxy polyoxyethylene mono(meth)acrylate, acid phosphoxy polyoxypropylene glycol (meth)acrylate, allyl alcohol acid phosphate, and KAYAMER PM-21 (trade name, manufactured by Nippon Kayaku Co., Ltd.).

The vinyl monomer having sulfonic acid groups is, for example, 2-ethylsulfonic acid (meth)acrylate, 2-acrylamide-2-methylpropane sulfonic acid, styrene sulfonic acid, and isoprene sulfonic acid.

The vinyl monomer having epoxy groups is, for example, glycidyl (meth)acrylate and (meth)allyl glycidyl ether.

The vinyl monomer having hydroxyl groups is, for example, 2-hydroxyethyl (meth)acrylate, 2-hydroxypropyl (meth)acrylate, 2-hydroxybutyl (meth)acrylate, 3-hydroxybutyl (meth)acrylate, and 4-hydroxybutyl (meth)acrylate.

Among the vinyl monomers (B) having polar groups, from viewpoints of reactivity with the methacrylic acid ester-based macromonomer (A-1), compatibility of the resulting PVDF modifier with PVDF, enhancement effect of adhesion to metal, size of PVDF crystals, and phase-separated structure between the PVDF phase and the modifier phase, the vinyl monomers having carboxyl groups, carboxylic acid anhydride groups and phosphate groups as polar groups are preferable. Specifically, the vinyl monomer (B) is preferably the following compounds: acrylic acid, methacrylic acid, maleic acid, maleic anhydride, fumaric acid, 2-carboxyethyl (meth)acrylate, 2-(meth)acryloyloxy ethyl acid phosphate, and KAYAMER PM-21 (trade name, manufactured by Nippon Kayaku Co., Ltd.). One type of the vinyl monomers (B) having polar groups may be used alone, or two or more types thereof may be used in combination.

### <Macromonomer Copolymer (X)>

The macromonomer copolymer (X) is obtained by copolymerizing a macromonomer (A) with the vinyl monomer (B) having polar groups. With respect to a total mol number of monomer units and monomer (B) units in the macromonomer (A), the content of the monomer (B) units in the macromonomer copolymer (X) is preferably 1 mol%∼50 mol%, and more preferably 3 mol%∼40 mol%. If within this range, the compatibility of the resulting PVDF modifier with PVDF and enhancement effect of adhesion to metal are sufficiently displayed.

With respect to the total mol number of monomer units and monomer (B) units in the macromonomer (A), the content of the macromonomer (A) units in the macromonomer copolymer (X) is preferably adjusted to render the monomer units in the macromonomer (A) in an amount of 50 mol%∼99 mol%, and is more preferably adjusted to render the monomer units in an amount of 60 mol%∼97 mol%. If within this range, the compatibility of the resulting PVDF modifier with PVDF and enhancement effect of adhesion to metal are sufficiently displayed.

The macromonomer copolymer (X) may contain other vinyl monomer units as needed. Other vinyl monomers that become constituent ingredients of the other vinyl monomer units include, for example, (meth)acrylonitrile, (meth)acrylamide, vinyl chloride, vinyl bromide, vinylidene chloride, styrene, α-methylstyrene, maleimide, phenylmaleimide, and vinyl acetate. One type of the other vinyl monomers may be used alone, or two or more types thereof may be used in combination.

From viewpoints of compatibility of the resulting PVDF modifier with PVDF, enhancement effect of adhesion to metal, size of PVDF crystals, and phase-separated structure between the PVDF phase and the modifier phase, a number average molecular weight of the macromonomer copolymer (X) is preferably 600-2,000,000, and more preferably 1,200-1,000,000.

### <Production Method of Macromonomer Copolymer (X)>

The macromonomer copolymer (X) is obtained by copolymerizing the macromonomer (A), preferably the methacrylic acid ester-based macromonomer (A-1), with the vinyl monomer (B) having polar groups. A production method thereof may be any publicly known polymerization method, such as bulk polymerization, solution polymerization, emulsion polymerization and suspension polymerization. Among these polymerization methods, from a viewpoint of reactivity with the macromonomer (A) with the vinyl monomer (B) having polar groups, solution polymerization is preferable.

A solvent used in solution polymerization is preferably a solvent capable of being dissolved and dispersed by the macromonomer (A), the vinyl monomer (B) having polar groups, and the macromonomer copolymer (X). For example, the following solvents may be mentioned: water, methanol, ethanol, isopropanol, benzene, toluene, xylene, acetone, methyl ethyl ketone, dimethoxyethane, tetrahydrofuran, chloroform, carbon tetrachloride, dichlorethylene, ethyl acetate, N,N-dimethylformamide, N,N-dimethylacetamide, and dimethyl sulfoxide. One type of these solvents may be used alone, or two or more types thereof may be used in combination.

A polymerization initiator used in solution polymerization is, for example, a publicly known radical polymerization initiator (azo compound, organic peroxide). The azo compound is, for example, the following compounds: 2,2'-azobis(isobutyronitrile), 2,2'-azobis(2,4-dimethylvaleronitrile), 2,2'-azobis(isobutyrate)dimethyl, 4,4'-azobis(4-cyanovaleric acid), 2,2'-azobis(2-amidinopropane)dihydrochloride, and 2,2'-azobis{2-methyl-N-[2-(1-hydroxybutyl)]-propionamide}. The organic peroxide is, for example, benzoyl peroxide and lauroyl peroxide.

In addition, redox polymerization initiators consisting of one of water-soluble inorganic compounds such as persulfates, perborates and percarbonates, or a combination of the foregoing with a water-soluble reducing agent, or redox polymerization initiators consisting of a combination of hydrogen peroxide or organic peroxide with a reducing agent may be used.

The PVDF modifier of the invention contains the macromonomer copolymer (X). The macromonomer copolymer (X) may be used alone as one type, or in combination as a mixture of two or more types having different copolymerization compositions, number average molecular weights, etc. In addition, the PVDF modifier of the invention may contains, in addition to the macromonomer copolymer (X), publicly known stabilizer, additive, or the like as needed.

### <Resin Composition>

The PVDF modifier of the invention may be used in mixture with PVDF. The resin composition containing the PVDF modifier and PVDF has excellent adhesion.

The PVDF used in the invention is, for example, a publicly known polymer. The PVDF is, for example, vinylidene fluoride homopolymers ("Fluorine Resin Handbook" Satogawa ed., 1990, Nikkan Kogyo Shimbun), and copolymers of vinylidene fluoride and other monomers (Japanese Patent Publication No. Hei 6-336510; U.S. Patent No. 4,076,929; U.S. Patent No. 4,569,978). The content of vinylidene fluoride units in the PVDF is 50∼100 mass%. The PVDF may be a mixture of the vinylidene fluoride units in the range of 50∼100 mass% with other resins. The other resins are, for example, fluorine resins such as polytetrafluoroethylene.

In addition, modified polymers obtained by modifying the PVDF by heating treatment, acid treatment (Japanese Patent Publication No. Hei 10-255808), silane treatment (Japanese Patent Publication No. Hei 6-93025), sulfonation treatment (Japanese Patent Publication No. Hei 10-298386), radiation treatment (Japanese Patent Publication No. 2002-304997) and the like may also be mentioned.

The resin composition may be applied to extrusion products (film, sheet, plate, pipe, rod, contour extrusion product, strand, monofilament, fiber, etc.), injection-molded products, press-molded products, film material, coatings, binders for battery, or the like.

In these products, the resin composition is used as a binder resin composition for battery due to its excellent effect of enhancing adhesion between an electrode active material and a collector or adhesion between electrode active materials.

### <Electrode for Secondary Battery and Battery>

The binder resin composition for battery of the invention may be mixed with an electrode active material to be formed on an electrode layer. The electrode layer may be laminated on a collector to be formed on an electrode. A battery using the electrode is preferably a nonaqueous secondary battery, and the electrode is preferably a positive electrode or negative electrode for lithium ion secondary battery.

The binder resin composition for battery preferably contains 1∼70 mass% PVDF modifier and 30∼99 mass% PVDF, and more preferably contains 2∼60 mass% PVDF modifier and 40∼98 mass% PVDF. If within this range, the binder resin composition for battery has high electrical stability, and shows a good effect on enhancing the adhesion between the electrode active material and the collector, or the adhesion between electrode active materials. From a viewpoint of enhancement of adhesion strength, the content of the PVDF modifier is preferably 20∼60 mass%.

The collector may be any material as long as it has electrical conductivity, and metal may be used. A material of the collector is desirably a metal that does not generate an alloy with lithium, such as aluminium, copper, nickel, iron, titanium, vanadium, chromium, manganese, or alloys of the foregoing.

A shape of the collector is, for example, film-like, netlike or fibrous. Among these, a film-like shape is preferable. A thickness of the collector is preferably 5∼30 µm, and more preferably 8∼25 µm.

As the electrode active material, a positive electrode active material is, for example, a lithium-containing metal complex oxide containing lithium and one or more metals selected from iron, cobalt, nickel and manganese. A negative electrode active material is, for example, a carbon material such as graphite, amorphous carbon, carbon fiber, coke, and activated carbon; and a complex of the above carbon material and metal such as silicon, tin, silver or oxides of the foregoing. One type of the electrode active material may be used alone, or two or more types thereof may be used in combination.

The electrode active material may also be used in combination with a conductive assistant. The conductive assistant is, for example, graphite, carbon black, carbon nanotube, carbon nanofiber, acetylene black, and conductive polymer. One type of these conductive assistants may be used alone, or two or more types thereof may be used in combination.

An example of steps of manufacturing the electrode is provided as follows. The binder resin composition for battery and electrode active material of the invention are mixed in the presence of a solvent to obtain a slurry. The slurry is coated on the collector. After a resulting coated film is dried, a laminated body of the collector and the cured coated film is pressed as needed, thereby obtaining the electrode.

The drying conditions may be any conditions where the solvent used is fully removable and the binder resin composition for battery does not decompose, and, as long as a heating treatment is performed for 1 minute to 10 hours at preferably 60∼250°C and more preferably 80∼200°C. If within this range, the binder resin composition for battery does not decompose, and shows good effects on enhancing the adhesion between the electrode active material and the collector, or the adhesion between electrode active materials.

The solvent used for preparing the slurry is, for example, the following solvents: 4N-methylpyrrolidone, N,N-dimethylformamide, tetrahydrofuran, dimethylacetamide, dimethyl sulfoxide, hexamethylsulfonamide, tetramethylurea, acetone, methyl ethyl ketone, mixed solvent of N-methylpyrrolidone and ester solvents (ethyl acetate, n-butyl acetate, butyl cellosolve acetate, butyl carbitol acetate, etc.), mixed solvent of N-methylpyrrolidone and glyme solvents (diglyme, triglyme, tetraglyme, etc.) and water. One type of these solvents may be used alone, or two or more types thereof may be used in combination. In addition, publicly known dispersing agent and viscosity adjuster may be added as needed.

A permeable separator (such as a porous film made of polyethylene or polypropylene) is arranged between a negative electrode structure and a positive electrode structure manufactured in the above way, and the foregoing is impregnated in a nonaqueous electrolytic solution, thereby producing a nonaqueous secondary battery.

In addition, a structure obtained by winding a laminated body into a roll shape (whorl shape) is accommodated in a bottomed metal casing. A negative electrode is connected to a negative electrode terminal while a positive electrode is connected to a positive electrode terminal. After being impregnated with an electrolytic solution, the metal casing is sealed, thereby obtaining a cylindrical secondary battery. The laminated body consists of [a negative structure having active layers formed on both sides thereof]/[a separator]/[a positive structure having active layers formed on both sides thereof]/[a separator].

As the electrolytic solution, for example in the case of lithium ion secondary battery, a solution obtained by dissolving lithium salt as an electrolyte in a nonaqueous organic solvent at a concentration of 1M is used. The lithium salt is, for example, LiClO₄, LiBF₄, LiI, LiPF₆, LiCF₃SO₃, LiCF₃CO₂, LiAsF₆, LiSbF₆, LiAlCl₄, LiCl, LiBr, LiB(C₂H₅)₄, LiCH₃SO₃, LiC₄F₉SO₃, Li(CF₃SO₂)₂N, and Ll[(CO₂)₂]₂B. One type of these lithium salts may be used alone, or two or more types thereof may be used in combination.

The nonaqueous organic solvent is, for example, the following solvents: carbonates such as propylene carbonate, ethylene carbonate, butylene carbonate, dimethyl carbonate, diethyl carbonate, methylethyl carbonate, etc.; lactones such as γ-butyrolactone, etc.; ethers such as trimethoxymethane, 1,2-dimethoxyethane, diethyl ether, 2-ethoxyethane, tetrahydrofuran, 2-methyltetrahydrofuran, etc.; sulfoxides such as dimethyl sulfoxide, etc.; oxolanes such as 1,3-dioxolane, 4-methyl-1,3-dioxolane; nitrogen-containing compounds such as acetonitrile, nitromethane, NMP, etc.; esters such as methyl formate, methyl acetate, butyl acetate, methyl propionate, ethyl propionate, phosphotriester, etc.; glymes such as diglyme, triglyme, tetraglyme, etc.; ketones such as acetone, diethyl ketone, methyl ethyl ketone, methyl isobutyl ketone, etc.; sulfones such as sulfolane, etc.; oxazolidinones such as 3-methyl-2-oxazolidinone, etc.; and sultones such as 1,3-propane sultone, 4-butane sultone, naphthasultone, etc. One type of these solvents may be used alone, or two or more types thereof may be used in combination.

### Examples

In the following, the invention is more specifically described using examples. Preparation Example 1 is a synthesis example of a metal chain transfer catalyst (CoBF). Preparation Examples 2 and 3 are preparation examples of macromonomers (A1) and (A2). Examples 1∼5 are preparation examples of modifier for polyvinylidene fluorides (macromonomer copolymers (X1)∼(X5)). Examples 6∼10 relate to adhesion performance evaluation of a binder resin composition. Example 11 relates to performance evaluation of an electrode. "Part" and "%" in the examples mean "mass parts" and "mass%," respectively.

### (1) Composition of Polymer

The ratio (mol%) of introduction of double bond onto terminals of the macromonomer (A1), the introduction ratio (mol%) of the vinyl monomer (B) having polar groups in the macromonomer copolymer (X), and the introduction ratio (mol%) of the vinyl monomers (B) having polar groups in a copolymer (X') were measured using ¹H-NMR (manufactured by JEOL; JNM-EX270). The measurement was performed by using Dimethylsulfoxide-d₆ (DMSO-d₆) (manufactured by Wako Pure Chemical Industries, Ltd.) as a measurement solvent, and by dissolving an approximately 30 mg of a sample in 0.5 mL of DMSO-d₆ at 80°C for a cumulated number of 256 times.

### (2) Number Average Molecular Weight (Mn) and Weight Average Molecular Weight (Mw) of Polymer

A measurement was performed by a gel permeation chromatograph (GPC) (manufactured by Tosoh Corporation; GPC8020 System) using polymethyl methacrylate as a standard.

### [Preparation Example 1] Synthesis of Metal Chain Transfer Catalyst (diaquabis(boron difluorodiphenyl glyoximato)cobalt(II); CoBF)

0.5 g of cobalt acetate tetrahydrate and 1.0 g of diphenylglyoxime were placed in a 100 mL three-necked flask, and were dissolved by adding 20 mL of ether which had been deaerated under a nitrogen atmosphere. A resulting mixture was stirred at room temperature for 2 hours.

Then, 4 mL of boron trifluoride-diethyl ether complex was added thereto and the mixture was further stirred at room temperature for 12 hours. The mixture was filtered, and a resulting solid was washed with ether and dried in a vacuum dryer at room temperature for 24 hours, thereby obtaining a reddish brown solid.

As a result of the ¹H-NMR measurement and an elemental analysis, it was confirmed that the resulting solid had a structure in which R⁵∼R⁸ in the general formula (2) are phenyl groups.

### [Preparation Example 2] Synthesis of Macromonomer (A1)

1000 g of methyl methacrylate (MMA), 2000 g of water, 26.7 g of 3.5% sodium 2-sulfoethyl methacrylate/potassium methacrylate/methyl methacrylate copolymer aqueous solution as a dispersing agent, 13.3 g of sodium sulfate, and 0.01 g of the CoBF obtained in Preparation Example 1 were added to a 5 L separable flask having stirring blades, a thermometer and a cooling pipe, and were stirred at 300 rpm under a nitrogen atmosphere.

5.0 g of 2,2'-azobis(2,4-dimethylvaleronitrile) (trade name: V-65, manufactured by Wako Pure Chemical Industries, Ltd.) as a polymerization initiator was added, and the mixture was heated to and maintained at 60°C until polymerization heat generation was observed. After identifying a peak value of the polymerization heat generation, the mixture was heated to 70°C and maintained at the temperature for 30 minutes, and then was cooled to room temperature.

The mixture was filtered, and a resulting solid was washed with water and dried at 80°C for 24 hours, thereby obtaining the macromonomer (A1). The macromonomer (A1) was a mixture of two MMA macromonomers and had a structure in which R is methyl group and Z is -C(CH₃)(CN)-CH₂-CH(CH₃)₂ or methyl group in the general formula (1). The macromonomer (A1) had Mn of 18,000, Mw of 41,000, and double-bond introduction ratio of 88 mol%.

### [Preparation Example 3] Synthesis of Macromonomer (A2)

The macromonomer (A2) was obtained by the same method as in Preparation Example 2 except that the amount of the CoBF was changed to 0.04 g. The macromonomer (A2) was a mixture of two MMA macromonomers and had a structure in which R is methyl group and Z is -C(CH₃)(CN)-CH₂-CH(CH₃)₂ or methyl group in the general formula (1). The macromonomer (A2) had Mn of 4,000, Mw of 7,000, and double-bond introduction ratio of 68 mol%.

### [Example 1]

33.6 g (70 mass%) of the macromonomer (A1) obtained in Preparation Example 2 was dissolved in a mixed solvent of 112 g of tetrahydrofuran (THF) and 48 g of methanol in a 500 mL separable flask having stirring blades, a thermometer and a cooling pipe. 14.4 g (30 mass%) of acrylic acid was added thereto, and the mixture was stirred for 30 minutes under a nitrogen atmosphere.

0.14 g of 2,2'-azobis(2,4-dimethylvaleronitrile) as a polymerization initiator was added, and the mixture was stirred at 60°C for 6 hours and then was cooled to room temperature. The reaction solution was subjected to reprecipitation with water, and after filtration, dried at 80°C for 24 hours, thereby obtaining a macromonomer (A1)/acrylic acid copolymer (X1). The yield was 82%. The macromonomer copolymer (X1) had Mn of 29,000, Mw of 75,000, and acrylic acid introduction ratio of 15 mol%.

### [Examples 2 and 3]

Macromonomer copolymers (X2) and (X3) were obtained by the same method as in Example 1 except that one or more of conditions including type of macromonomer, amount used thereof, type of vinyl monomer (B) having polar groups, and amount used thereof were changed to the conditions as shown in Table 1. A synthesis yield, vinyl monomer (B) introduction ratio, as well as Mn and Mw of the copolymer are shown in Table 1.

### [Example 4]

43.2 g (90 mass%) of the macromonomer (A1) obtained in Preparation Example 2 were used as the macromonomer, and 4.8 g (10 mass%) of 2-methacryloyloxy ethyl acid phosphate (Lightester P1M: manufactured by KYOEISHA CHEMICAL CO., LTD; hereinafter simply referred to as "P1M") were used as the vinyl monomer (B) having polar groups. A macromonomer copolymer (X4) was obtained by the same method as in Example 1 except for the above conditions. A synthesis yield, vinyl monomer (B) introduction ratio, as well as Mn and Mw of the copolymer are shown in Table 1.

### [Example 5]

43.2 g (90 mass%) of the macromonomer (A1) obtained in Preparation Example 2 were used as the macromonomer, and 4.8 g (10 mass%) of maleic anhydride were used as the vinyl monomer (B) having polar groups. A macromonomer copolymer (X5) was obtained by the same method as in Example 1 except for the above conditions. A synthesis yield, vinyl monomer (B) introduction ratio, as well as Mn and Mw of the copolymer are shown in Table 1.

### [Comparative Example 1]

Methyl methacrylate was used as a substitute for the macromonomer in the comparative example. 36 g (75 mass%) of MMA and 12 g (25 mass%) of acrylic acid were dissolved in a mixed solvent of 112 g of THF and 48 g of methanol in a 500 mL separable flask having stirring blades, a thermometer and a cooling pipe, and the mixture was stirred for 30 minutes under a nitrogen atmosphere.

0.2 g of 2,2'-azobis(2,4-dimethylvaleronitrile) as a polymerization initiator was added, and the mixture was stirred at 60°C for 4 hours and then was cooled to room temperature. The reaction solution was subjected to reprecipitation with water, and after filtration, dried at 80°C for 24 hours, thereby obtaining a MMA/acrylic acid copolymer (X'1). A synthesis yield, vinyl monomer (B) introduction ratio, as well as Mn and Mw of the copolymer are shown in Table 1.

### [Comparative Examples 2 and 3]

Copolymers (X'2) and (X'3) were obtained by the same method as in Comparative Example 1 except that one or more of conditions including amount used of MMA, type of vinyl monomer (B) having polar groups, and amount used thereof were changed to the conditions as shown in Table 1. A synthesis yield, vinyl monomer (B) introduction ratio, as well as Mn and Mw of the copolymer are shown in Table 1.

**Table 1**

| | Raw Material | | | | | | | Synthesis Yield | Macromonomer Copolymer (X) or Substitute Thereof | | | Type of PVDF Modifier |
|---|---|---|---|---|---|---|---|---|---|---|---|---|
| | Macromonomer (A) or Substitute Thereof | | | Vinyl Monomer (B) Having Polar Groups | | | | | Type | Molecular Weight | | |
| | Type | g | Mass% | Type | g | Mass% | Introduction Ratio mol% | % | | Mn | Mw | |
| Example 1 | Macromonomer (A1) | 33.6 | 70 | Acrylic acid | 14.4 | 30 | 15 | 82 | X1 | 29000 | 75000 | (1) |
| Example 2 | Macromonomer (A2) | 34.6 | 70 | Acrylic acid | 14.4 | 30 | 15 | 80 | X2 | 4000 | 14000 | (2) |
| Example 3 | Macromonomer (A1) | 40.8 | 85 | Acrylic acid | 7.2 | 15 | 7 | 77 | X3 | 26000 | 69000 | (3) |
| Example 4 | Macromonomer (A1) | 43.2 | 90 | P1m | 4.8 | 10 | 7 | 85 | X4 | 54000 | 80000 | (4) |
| Example 5 | Macromonomer (A1) | 43.2 | 90 | Maleic anhydride | 4.8 | 10 | 8 | 82 | X5 | 32000 | 74000 | (5) |
| Comparative Example 1 | MMA | 36 | 75 | Acrylic acid | 12 | 25 | 16 | 56 | X'1 | 27000 | 65000 | (1') |
| Comparative Example 2 | MMA | 45.6 | 95 | P1m | 2.5 | 5 | 9 | 43 | X'2 | 13000 | 32000 | (2') |
| Comparative Example 3 | MMA | 43.2 | 90 | Maleic anhydride | 4.8 | 10 | 8 | 63 | X'3 | 12000 | 37000 | (3') |

| | | | | | | | | | | | | |
|---|---|---|---|---|---|---|---|---|---|---|---|---|
| [Note] P1M: 2-methacryloyloxy ethyl acid phosphate | | | | | | | | | | | | |

### [Examples 6∼10] and [Comparative Examples 4∼7]

The eight copolymers (X1)∼(X5) and (X'1)∼(X'3) obtained in Examples 1∼5 and Comparative Examples 1∼3 were employed as PVDF modifiers (1)-(5) and (1')∼(3'), respectively. Each of the PVDF modifiers and PVDF (PVDF#1100, polyvinylidene fluoride manufactured by Kureha Corporation having Mw of 280,000) were prepared according to proportions set forth in Table 2. With respect to 20 parts of the composition, 80 parts of NMP were added to dissolve them to produce a solution. A test piece was manufactured using the solution according to the above "1. manufacturing conditions of test piece, and 2. measurement conditions of adhesion," and a peeling strength of the test piece was measured to reach results shown in Table 2.

**Table 2**

| | PVDF Modifier | | | PVDF Part | Peeling Strength g/cm |
|---|---|---|---|---|---|
| | Type | Introduction Ratio of Vinyl Monomer (B), Molecular Weight | Part | | |
| Example 6 | (1) | Acrylic acid (15 mol%), Mn: 29000 | 10 | 90 | 178 |
| | | | 30 | 70 | 243 |
| | | | 50 | 50 | 342 |
| Example 7 | (2) | Acrylic acid (15 mol%), Mn: 4000 | 10 | 90 | 71 |
| | | | 30 | 70 | 127 |
| | | | 50 | 50 | 157 |
| Comparative Example 4 | (1') | Acrylic acid (16 mol%), Mn: 27000 | 10 | 90 | 14 |
| | | | 30 | 70 | 10 |
| | | | 50 | 50 | 26 |
| Example 8 | (3) | Acrylic acid (7 mol%), Mn: 26000 | 30 | 70 | 21 |
| | | | 50 | 50 | 83 |
| Example 9 | (4) | P1M (7 mol%), Mn: 54000 | 30 | 70 | 239 |
| | | | 50 | 50 | 243 |
| Comparative Example 5 | (2') | P1M (9 mol%), Mn: 13000 | 30 | 70 | 2 |
| | | | 50 | 50 | 4 |
| Example 10 | (5) | Maleic anhydride (8 mol%), Mn: 32000 | 30 | 70 | 123 |
| | | | 50 | 50 | 165 |
| Comparative Example 6 | (3') | Maleic anhydride (8 mol%), Mn: 12000 | 30 | 70 | 12 |
| | | | 50 | 50 | 25 |
| Comparative Example 7 | - | - | 0 | 100 | 0.1 |

As shown in Table 2, the peeling strength in Comparative Examples 4∼7 was less than 20 g/cm, showing insufficient adhesion to aluminium foil.

### [Example 11]

5000 parts of lithium cobaltate, 200 parts of acetylene black, 30 parts of the modifier (1) obtained in Example 1, and 70 parts of "PVDF#1100" were dissolved and mixed in 5000 parts of NMP to prepare a slurry. A resulting slurry was coated on an aluminium foil (length: 19 cm; width: 25 cm; thickness: 20 µm) using an applicator, and a resulting coated film was dried at 100°C for 1 hour to form an electrode layer (cured coated film) having a thickness of 50 µm on the aluminium foil.

The aluminium foil having an electrode layer (hereinafter "electrode") formed thereon was cut into a width of 1 cm and a length of 5 cm, and was wound around a Teflon (trademark of DuPont) rod having a diameter of 8 mm or 10 mm. After being maintained for 1 minute, the aluminium foil was unwounded and flattened, and whether there was any breaking of the electrode layer and any peeling-off of the electrode layer from the aluminium foil was observed by eyes. In addition, the evaluation was performed in a circumstance at 23°C.

According to the following standards, the performance as an electrode was evaluated.
Rank 1: Neither breaking of the electrode layer nor peeling-off from the aluminium foil was seen.
Rank 2: Breaking of the electrode layer was not seen, while peeling-off from the aluminium foil was seen.
Rank 3: Breaking of the electrode layer was seen, while peeling-off from the aluminium foil was not seen.
Rank 4: Both breaking of the electrode layer and peeling-off from the aluminium foil were seen.

### [Comparative Example 8]

An evaluation was performed by the same method as in Example 11 except that 100 parts of PVDF#1100 instead of the modifier (1) were used.

**Table 3**

| | Binder Resin Composition | Φ10 mm | Φ8 mm |
|---|---|---|---|
| Example 11 | PVDF modifier (1)/PVDF = 30/70 | Rank 1 | Rank 1 |
| Comparative Example 8 | PVDF = 100 | Rank 4 | Rank 4 |

As shown in Table 3, the cured coated film composed of the binder resin composition in Example 11 that was blended with the modifier of the invention has excellent adhesion to the aluminium foil. Therefore, even in the case where the electrode was bent at a diameter of 8 mm, neither breaking of the electrode layer nor peeling-off thereof from the aluminium foil was seen. From this, it was confirmed that the invention was also useful as a cylindrical secondary battery.

On the other hand, in Comparative Example 8, because the product was composed of the binder resin composition that was not blended with the modifier of the invention, even in the case where the electrode was bent at a diameter of 10 mm, not only breaking of the electrode layer but also peeling-off thereof from the aluminium foil was seen. From this, it was confirmed that the product was not satisfactory as a cylindrical secondary battery.

### [Industrial Usability]

The PVDF modifier of the invention may be applied as a modifier for PVDF used in coatings, electrical components, electronic components, films, or the like. In addition, it may be applied to a binder resin composition for battery as well as to an electrode for secondary battery and a battery.

## Claims

1. A modifier for polyvinylidene fluoride having a peeling strength of 20 g/cm or more measured under the following conditions:
I. Manufacturing conditions of a test piece:
Obtaining a test piece by preparing a solution containing 6 parts by mass of the modifier for polyvinylidene fluoride, 14 parts by mass of polyvinylidene fluoride and 80 parts by mass of N-methylpyrrolidone; coating the solution on an aluminium foil using an applicator, and drying a resulting coated film at 100°C for 1 hour to obtain a laminated body of the aluminium foil and a film having a thickness of 30 µm; cutting the laminated body into a width of 1 cm and a length of 15 cm, and adhering the film of the laminated body to a PET sheet (width: 2 cm; length: 10 cm; thickness: 135 µm) with a double-sided tape (manufactured by Sekisui Chemical Co., Ltd.; trade name: #570);
II. Measurement conditions of adhesion:
Evaluating adhesion by a measurement in which the aluminium foil of the test piece is clamped using a tensilon (RTC-1210A manufactured by Orientec) and stretched at 10 mm/min to measure a load when interfaces of the aluminium foil and the film are peeled apart at 180°, wherein the measurement is performed in a circumstance at 23°C.]

2. The modifier for polyvinylidene fluoride of claim 1, comprising a macromonomer copolymer (X) obtained by polymerizing a macromonomer (A) having unsaturated double bonds and a vinyl monomer (B) having polar groups.

3. The modifier for polyvinylidene fluoride of claim 2, wherein the macromonomer (A) having unsaturated double bonds is a methacrylic acid ester-based macromonomer (A-1).

4. The modifier for polyvinylidene fluoride of claim 3, wherein the methacrylic acid ester-based macromonomer (A-1) is represented by the following general formula (1): 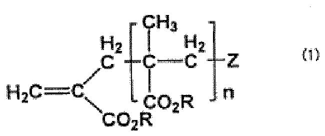 [in the general formula (1), R is a linear chain, branched chain, or cyclic hydrocarbon group having 1∼24 carbon atoms and is one selected from a group consisting of alkyl group, phenyl group, benzyl group, aryl group and alkyl ether group, which may have a substituent selected from a group consisting of epoxy group, hydroxyl group, isocyanate group, cyano group, amino group, silyl group, acid and halogen group;
Z is one selected from a group consisting of H, OR², SR², S(O)R¹, S(O)₂R¹ and R³.
R¹ is one selected from a group consisting of alkyl group, aryl group, aralkyl group and organosilyl group, which may have a substituent selected from a group consisting of carboxyl group, epoxy group, hydroxyl group, alkoxy group, amino group and halogen group;
R² is one selected from a group consisting of H, alkyl group, aryl group, aralkyl group and organosilyl group, which may have a substituent selected from a group consisting of carboxyl group, epoxy group, hydroxyl group, alkoxy group, amino group and halogen group;
R³ is a fragment from a chain transfer reaction or initiation reaction in a free radical polymerization and is one selected from a group consisting of alkyl group, cycloalkyl group, aryl group, aralkyl group, organosilyl group, alkoxyalkyl group, alkoxyaryl group, PR² group and sulfate group, which may have a substituent selected from a group consisting of R¹, OR², SR¹, NR¹₂NHR¹, O₂CR¹, halogen, COOH (or metal salt thereof), COOR¹, CN, CONH₂, CONHR¹, CONR¹₂, 2-imidazoline (or metal salt thereof) and amidine (or metal salt thereof);
n is an integer of 0 or greater; when n is greater than 1, R in a repeating unit in the methacrylic acid ester-based macromonomer (A) comprises two or more different groups.

5. The modifier for polyvinylidene fluoride of any one of claims 2 to 4, wherein the polar group is one or more selected from carboxyl group, carboxylic acid anhydride group, phosphate group, sulfonic acid group, and salts of the foregoing, epoxy group, and hydroxyl group.

6. A binder resin composition for battery, comprising the modifier for polyvinylidene fluoride of any one of claims 1 to 4 and polyvinylidene fluoride.

7. A binder resin composition for battery, comprising the modifier for polyvinylidene fluoride of claim 5 and polyvinylidene fluoride.

8. An electrode for second battery, comprising a collector and an electrode layer disposed on the collector, wherein the electrode layer comprises an electrode active material and the binder resin composition for battery of claim 6 or claim 7.

9. A battery comprising the electrode for second battery of claim 8.
